# EUROPEAN PATENT APPLICATION

(11) **EP 4 553 654 A1**
(43) Date of publication of application: **14.05.2025**
(21) Application number: 23854453.0
(22) Date of filing: 15.08.2023
(51) Int. Cl.: G06F 9/48

(54) **LIFECYCLE SCHEDULING METHOD AND APPARATUS, AND ELECTRONIC DEVICE**

(30) Priority: 16.08.2022 CN 202210980510
(71) Applicant: Huawei Technologies Co., Ltd., Shenzhen, Guangdong 518129 (CN)
(72) Inventor: ZHANG, Yafei, Shenzhen, Guangdong 518129 (CN); HUANG, Shiyu, Shenzhen, Guangdong 518129 (CN); SUN, Bingxin, Shenzhen, Guangdong 518129 (CN)
(74) Representative: MERH-IP Matias Erny Reichl Hoffmann Patentanwälte PartG mbB
(86) International application number: PCT/CN2023/113198
(87) International publication number: WO 2024/037553

(57) **Abstract**

A lifecycle scheduling method and apparatus, an electronic device, and a computer-readable storage medium are provided. The method includes: obtaining a lifecycle in which a function instance is located (S01); detecting whether there is an asynchronous task that needs to be executed within the lifecycle (S02); and if there is the asynchronous task that needs to be executed within the lifecycle, switching the lifecycle in which the function instance is located to a next lifecycle after execution of the asynchronous task is completed (S03). In this method, after it is detected that there is an asynchronous task that needs to be executed within a lifecycle in which a function instance is located, the lifecycle in which the function instance is located is switched to a next lifecycle only after execution of the asynchronous task is completed. In this way, an original synchronous scheduling manner of the lifecycle is changed to implement a synchronous interface in an asynchronous manner, and processing of the asynchronous task is completed within the current lifecycle of the function instance.

## Description

This application claims priority to Chinese Patent Application No. 202210980510.4, filed with the China National Intellectual Property Administration on August 16, 2022 and entitled "LIFECYCLE SCHEDULING METHOD AND APPARATUS, AND ELECTRONIC DEVICE", which is incorporated herein by reference in its entirety.

### TECHNICAL FIELD

This application relates to the field of lifecycle scheduling, and specifically, to a lifecycle scheduling method and apparatus, an electronic device, and a computer-readable storage medium.

### BACKGROUND

When a user starts or exits an application, or switches between different applications, an operating system schedules a function instance (Ability) in the application to switch between different lifecycles, so as to invoke a callback method corresponding to a lifecycle of a function instance. The callback method includes corresponding service logic pre-implemented by an application developer.

Currently, prototypes of lifecycle callback methods for function instances are all synchronous interfaces. A function instance manager service (Ability Manager Service, AMS) also schedules a lifecycle of a function instance in a synchronous manner. That is, after a previous lifecycle ends, the function instance automatically enters a next lifecycle. However, most of application programming interfaces (Application Programming Interfaces, APIs) provided by an operating system are asynchronous interfaces. Therefore, an asynchronous task needs to be processed inevitably in a synchronous lifecycle callback. If an application needs to enter a next lifecycle after processing of some asynchronous tasks are completed, current lifecycle scheduling and a synchronous interface are restricted in usage.

For example, when an application is exited, a function instance is destroyed. A message application needs to ensure that draft information of a user is stored into a database before the function instance is destroyed. A task of storing the draft information into the database is an asynchronous task, while a "function instance destruction lifecycle" callback during destruction of the function instance is a synchronous interface. As a result, there is a risk of losing the draft information of the user before the application is exited.

Therefore, how to process an asynchronous task within a current lifecycle of a function instance is a technical problem that needs to be resolved in this field.

### SUMMARY

To resolve a problem in a conventional technology that processing of an asynchronous task cannot be completed within a current lifecycle of a function instance, this application provides a lifecycle scheduling method.

A lifecycle scheduling method includes:
obtaining a lifecycle in which a function instance is located;
detecting whether there is an asynchronous task that needs to be executed within the lifecycle; and
if there is the asynchronous task that needs to be executed within the lifecycle, switching the lifecycle in which the function instance is located to a next lifecycle after execution of the asynchronous task is completed.

Optionally, the detecting whether there is an asynchronous task that needs to be executed within the lifecycle includes:
detecting whether an asynchronous interface exists in a callback function corresponding to the lifecycle; and
if the asynchronous interface exists in the callback function corresponding to the lifecycle, determining that an asynchronous task corresponding to the asynchronous interface is the asynchronous task that needs to be executed within the lifecycle.

Optionally, the detecting whether an asynchronous interface exists in a callback function corresponding to the lifecycle includes:
detecting whether a name of the callback function corresponding to the lifecycle includes a first keyword;
if the name of the callback function corresponding to the lifecycle includes the first keyword, detecting whether an interface whose name includes a second keyword exists in the callback function corresponding to the lifecycle; and
if the interface whose name includes the second keyword exists in the callback function corresponding to the lifecycle, determining that the interface whose name includes the second keyword is the asynchronous interface.

Optionally, the method further includes:
obtaining an asynchronous interface invoking instruction, and determining a to-be-called callback function and a to-be-called asynchronous interface according to the asynchronous interface invoking instruction;
adding the to-be-called asynchronous interface to the to-be-called callback function; and
adding the first keyword to a name of the to-be-called callback function, and adding the second keyword to a name of the to-be-called asynchronous interface.

Optionally, the first keyword includes a keyword "async", and the second keyword includes a keyword "await".

Optionally, the method further includes:
when there is no asynchronous task that needs to be executed within the lifecycle, detecting whether execution of a synchronous task within the lifecycle is completed; and
if the execution of the synchronous task within the lifecycle is completed, switching the lifecycle in which the function instance is located to the next lifecycle.

Optionally, before the execution of the asynchronous task is completed, the method further includes:
when there is the asynchronous task that needs to be executed within the lifecycle, storing the asynchronous task into a task queue; and
executing a synchronous task that is within the lifecycle, and executing the asynchronous task in the task queue after the execution of the synchronous task is completed.

In other words, in this embodiment of this application, an asynchronous task may be first put into in a task queue, then a synchronous task within the function instance startup lifecycle is executed, and a thread sequentially executes asynchronous tasks in the task queue when the thread is idle, thereby improving task execution efficiency within the lifecycle.

Optionally, before the obtaining a lifecycle in which a function instance is located, the method further includes:
detecting whether there is a lifecycle scheduling request of the function instance;
if there is the lifecycle scheduling request of the function instance, determining a synchronous interface corresponding to the lifecycle scheduling request; and
invoking a function instance manager service to execute a synchronous task corresponding to the synchronous interface.

Optionally, before the execution of the asynchronous task is completed, the method further includes:
determining a lifecycle status of the function instance based on the lifecycle in which a function instance is located; and
the switching the lifecycle in which the function instance is located to a next lifecycle after execution of the asynchronous task is completed includes:
   after the execution of the asynchronous task is completed, changing the lifecycle status of the function instance to a lifecycle status corresponding to the next lifecycle.

In other words, in this embodiment of this application, lifecycle switching may be performed by changing a lifecycle status. In this way, execution of a thread is not blocked, and a procedure of switching a lifecycle status of a function instance is clearer.

Optionally, the lifecycle includes at least one of a function instance startup lifecycle, a function instance destruction lifecycle, a function instance switching-to-foreground lifecycle, a function instance switching-to-background lifecycle, a function instance interface creation lifecycle, and a function instance interface destruction lifecycle.

A lifecycle scheduling apparatus includes:
an obtaining module, configured to obtain a lifecycle in which a function instance is located;
a detection module, configured to detect whether there is an asynchronous task that needs to be executed within the lifecycle; and
a switching module, configured to: if there is the asynchronous task that needs to be executed within the lifecycle, switch the lifecycle in which the function instance is located to a next lifecycle after execution of the asynchronous task is completed.

An electronic device, including:
a processor and a memory, where the memory is configured to store at least one instruction, and the instruction is loaded and executed by the processor to implement the lifecycle scheduling method; and
a computer-readable storage, where the computer-readable storage medium stores a computer program, and when the computer program is executed by the processor, the lifecycle scheduling method is implemented.

According to the lifecycle scheduling method provided in embodiments of this application, a lifecycle in which a function instance is located is obtained; it is detected whether there is an asynchronous task that needs to be executed within the lifecycle; and if there is the asynchronous task that needs to be executed within the lifecycle, after execution of the asynchronous task is completed, the lifecycle in which the function instance is located is switched to a next lifecycle. In this application, after it is detected that there is an asynchronous task that needs to be executed within a lifecycle in which a function instance is located, the lifecycle in which the function instance is located is switched to a next lifecycle only after execution of the asynchronous task is completed. In this way, an original synchronous scheduling manner of the lifecycle is changed to implement a synchronous interface in an asynchronous manner, and processing of the asynchronous task is completed within the current lifecycle of the function instance.

### BRIEF DESCRIPTION OF DRAWINGS

To describe the technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram of a solution for completing asynchronous task processing in a synchronous lifecycle interface in a conventional technology;
FIG. 2 is a diagram of a structure of an electronic device 100 according to an embodiment of this application;
FIG. 3 is a flowchart of a lifecycle scheduling method according to an embodiment of this application;
FIG. 4 is a diagram of lifecycle scheduling for a function instance according to an embodiment of this application;
FIG. 5 is a flowchart of another actual representation manner of S02 in the lifecycle scheduling method provided in FIG. 3;
FIG. 6 is a diagram of another lifecycle scheduling for a function instance according to an embodiment of this application;
FIG. 7 is a diagram of lifecycle status switching according to an embodiment of this application;
FIG. 8A to FIG. 8D are an overall flowchart of lifecycle status switching according to an embodiment of this application;
FIG. 9 is a flowchart of another lifecycle scheduling method according to an embodiment of this application;
FIG. 10 is a diagram of an implementation of a lifecycle scheduling scenario according to an embodiment of this application; and
FIG. 11 is a diagram of a structure of a lifecycle scheduling apparatus according to an embodiment of this application.

### DESCRIPTION OF EMBODIMENTS

To better understand the technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

Terms used in embodiments of this application are merely for the purpose of describing specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

When a user starts or exits an application, or switches between different applications, an operating system schedules a function instance (Ability) in the application to switch between different lifecycles, so as to invoke a callback method corresponding to a lifecycle of a function instance. The callback method includes corresponding service logic pre-implemented by an application developer.

Currently, prototypes of lifecycle callback methods for function instances are all synchronous interfaces. A function instance manager service (Ability Manager Service, AMS) also schedules a lifecycle of a function instance in a synchronous manner. That is, after a previous lifecycle ends, the function instance automatically enters a next lifecycle. However, most of application programming interfaces (Application Programming Interfaces, APIs) provided by an operating system are asynchronous interfaces. Therefore, an asynchronous task needs to be processed inevitably in a synchronous lifecycle callback. If an application needs to enter a next lifecycle after processing of some asynchronous tasks are completed, current lifecycle scheduling and a synchronous interface are restricted in usage.

For example, when an application is exited, a function instance is destroyed. A message application needs to ensure that draft information of a user is stored into a database before the function instance is destroyed. A task of storing the draft information into the database is an asynchronous task, while a "function instance destruction lifecycle" callback during destruction of the function instance is a synchronous interface. As a result, there is a risk of losing the draft information of the user before the application is exited.

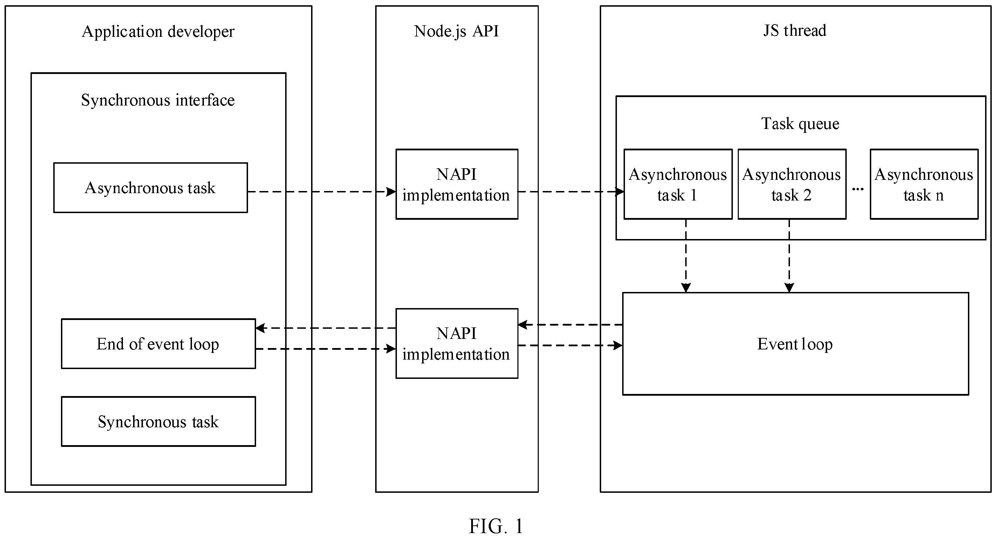

FIG. 1 is a diagram of a solution for completing asynchronous task processing in a synchronous lifecycle interface in a conventional technology.

In the conventional technology, when an application developer performs development based on an operating system, a web-like development paradigm extended based on JS (JavaScript, which is a lightweight, interpretative, or just-in-time compiled programming language with function priority) or a declarative development paradigm extended based on TS (TypeScript, which is an open-source programming language) may be used. Both development paradigms finally generate JavaScript code that runs on a JS thread. The JS thread executes a synchronous interface and an asynchronous interface as follows: An asynchronous task corresponding to the asynchronous interface is put into a task queue, the JS thread reads the task queue after execution of all synchronous tasks is completed, and the asynchronous task in the task queue ends waiting and starts to be executed.

As shown in FIG. 1, for a scenario in which processing of an asynchronous task needs to be completed in a synchronous lifecycle interface, in the conventional technology, an operating system provides an API for executing a single event, and an application developer invokes the API in the lifecycle interface to execute a JS task, and blocks the JS thread in the synchronous interface to wait for execution of the asynchronous task to complete.

In other words, in the conventional technology, the application developer needs to manually set a processing occasion of the asynchronous task in a lifecycle scheduling process, so that the processing of the asynchronous task can be completed in the synchronous lifecycle interface, and it is impossible for the operating system to process the asynchronous task on its own in the synchronous lifecycle interface. Therefore, this application provides a lifecycle scheduling method, to resolve the foregoing problems.

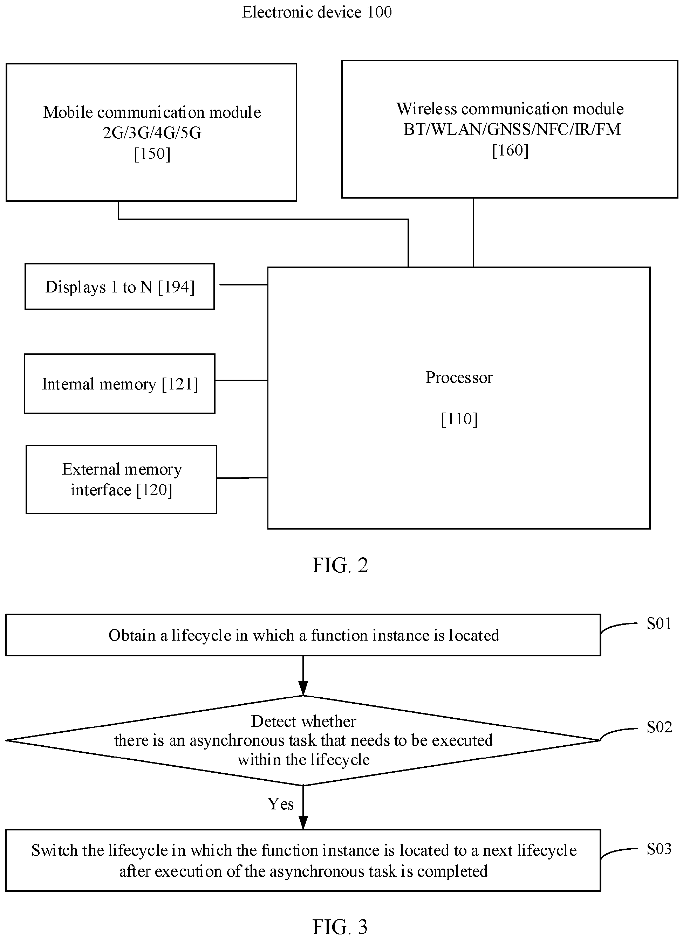

FIG. 2 is a diagram of a structure of an electronic device 100 according to an embodiment of this application.

The electronic device 100 may include a processor 110, an external memory interface 120, an internal memory 121, a mobile communication module 150, a wireless communication module 160, a button 190, a display 194, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like.

The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and that is applied to the electronic device 100. The wireless communication module 160 may be one or more components integrating at least one communication processing module.

The external memory interface 120 may be configured to connect to an external storage card, for example, a micro SD card, to extend a storage capability of the electronic device 100. The external memory card communicates with the processor 110 through the external memory interface 120, to implement a data storage function.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory that is disposed in the processor, to perform various function applications and data processing of the electronic device 100.

FIG. 3 is a flowchart of a lifecycle scheduling method according to an embodiment of this application. The method is applied to the processor 110 in the foregoing embodiment, and includes the following steps.

Step S01: Obtain a lifecycle in which a function instance is located.

In this embodiment of this application, a function instance (Ability) is an abstraction of a capability of an application, and is also an important part of the application. One application may have a plurality of capabilities (that is, may include a plurality of abilities). An operating system supports application deployment in units of abilities. When a user starts or exits an application, or switches between different applications, the operating system schedules an ability in the application to switch between different lifecycles, so as to invoke a callback method corresponding to a lifecycle of a function instance. The callback method includes corresponding service logic pre-implemented by an application developer.

In a specific embodiment, a processor may obtain a lifecycle in which a function instance is located by querying a name of a callback method that is currently invoked for the function instance, or may obtain a lifecycle in which a function instance is located by querying a lifecycle status of the function instance.

For example, when the lifecycle in which the function instance is located needs to be obtained, if the processor queries that the name of the callback method that is currently invoked for the function instance is an onCreate method, it may be determined that the lifecycle in which the function instance is located is a function instance startup lifecycle.

In a specific embodiment, the lifecycle may include at least one of a function instance startup lifecycle, a function instance destruction lifecycle, a function instance switching-to-foreground lifecycle, a function instance switching-to-background lifecycle, a function instance interface creation lifecycle, and a function instance interface destruction lifecycle.

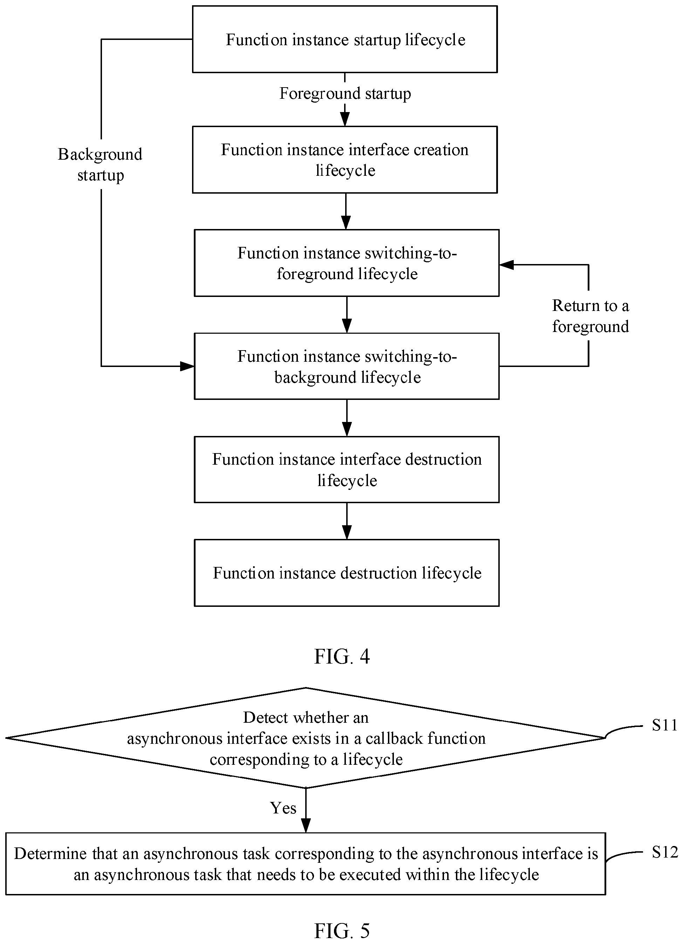

For example, FIG. 4 is a diagram of lifecycle scheduling for a function instance according to an embodiment of this application. As shown in FIG. 4, lifecycle scheduling for an ability includes the following lifecycles.

### (1) Function instance startup lifecycle (onCreate)

This callback is triggered when a system creates an ability instance for the first time. For an ability instance, the callback is triggered only once within a lifecycle of the ability. The ability enters an inactive state after this logic.

### (2) Function instance interface creation lifecycle (onWindowStageCreate)

This callback is triggered when a system creates an interface WindowStage. A user interface may be loaded in this lifecycle callback. This callback is triggered to create an application interface when the application is started in a foreground.

### (3) Function instance switching-to-foreground lifecycle (onForeground)

When an ability enters a foreground for the first time (for example, a start manner of an application is foreground startup) or returns to the foreground (for example, a user reopens an application), a system invokes an (onForeground) callback to notify a developer.

### (4) Function instance switching-to-background lifecycle (onBackground)

If an ability is no longer visible to a user (for example, the user manually switches the page to a background, or a start manner of an application is background startup), a system invokes this callback to notify a developer user of releasing a corresponding resource. Then, the ability enters a background state.

### (5) Function instance interface destruction lifecycle (onWindowStageDestroy)

This callback is triggered when a system destroys an interface WindowStage. A user interface may be destroyed in this lifecycle callback.

### (6) Function instance destruction lifecycle (onDestroy)

When a system is to destroy an ability, this callback function is triggered to notify a user of releasing a system resource. Reasons for destroying the ability may include the following aspects:
A user disables a specified ability through a system management capability, such as using a task manager to disable the ability.

Behavior of a user triggers invoking of an exit method of an ability, for example, use of an exit function of an application.

A configuration change causes a system to temporarily destroy an ability and rebuild an ability.

A system automatically triggers, for the purpose of resource management, destruction for an ability that is in a background state.

Step S02: Detect whether there is an asynchronous task that needs to be executed within the lifecycle.

If there is the asynchronous task that needs to be executed within the lifecycle, step S03 is performed.

In this embodiment, a purpose of detecting whether there is the asynchronous task that needs to be executed within the lifecycle is as follows: If there is the asynchronous task that needs to be executed within the lifecycle in which the function instance is located, step S03 is performed to wait for execution of the asynchronous task to complete, and then to switch the lifecycle in which the function instance is located to a next lifecycle. In this way, an original synchronous scheduling manner of the lifecycle is changed to implement a synchronous interface in an asynchronous manner, and processing of the asynchronous task is completed within the current lifecycle of the function instance.

For example, when a message application needs to ensure that draft information of a user is stored into a database before a function instance is destroyed, in this embodiment, before a "function instance destruction lifecycle" is switched to a next lifecycle, it may be first determined whether there is an asynchronous task of "storing the draft information of the user into the database" that needs to be executed within the "function instance destruction lifecycle". If there is the asynchronous task of "storing the draft information of the user into the database" that needs to be executed within the "function instance destruction lifecycle", a lifecycle in which a function instance is located is switched to a next lifecycle only after execution of the asynchronous task of "storing the draft information of the user into the database" is completed. In this way, an original synchronous scheduling manner of the lifecycle is changed to implement a synchronous interface in an asynchronous manner, processing of the asynchronous task is completed within the current lifecycle of the function instance, and avoids a risk of losing the draft information of the user before the application is exited.

In a specific embodiment, if there is no asynchronous task that needs to be executed within a lifecycle in which a function instance is located, whether to switch the lifecycle may be further determined based on completion of a synchronous task within the lifecycle. In other words, this embodiment of this application further includes:
when there is no asynchronous task that needs to be executed within the lifecycle, detecting whether execution of the synchronous task within the lifecycle is completed; and
if the execution of the synchronous task within the lifecycle is completed, switching the lifecycle in which the function instance is located to the next lifecycle.

On this basis, in a specific embodiment, when the execution of the synchronous task within the lifecycle is not completed, the execution of the synchronous task within the lifecycle may be continued, and the lifecycle in which the function instance is located is switched to the next lifecycle after the synchronous task is completed.

FIG. 5 is a flowchart of another actual representation manner of S02 in the lifecycle scheduling method provided in FIG. 3. In a specific embodiment, it is detected, by detecting whether an asynchronous interface exists in a callback function, whether there is an asynchronous task that needs to be executed within a lifecycle. That is, the detecting whether there is an asynchronous task that needs to be executed within the lifecycle, as mentioned in step S02, may be specifically implemented by performing the steps shown in FIG. 2.

Step S11: Detect whether an asynchronous interface exists in a callback function corresponding to the lifecycle.

If the asynchronous interface exists in the callback function corresponding to the lifecycle, step S12 is performed.

In this embodiment, when it is detected that the asynchronous interface exists in the callback function corresponding to the lifecycle, it proves that there is an asynchronous task that needs to be executed within the lifecycle. In this case, step S12 is performed to determine that an asynchronous task corresponding to the asynchronous interface is the asynchronous task that needs to be executed within the lifecycle.

In a specific embodiment, when no asynchronous interface exists in the callback function corresponding to the lifecycle, it proves that there is no asynchronous task that needs to be executed within the lifecycle. In this case, the step of detecting whether execution of the synchronous task within the lifecycle is completed may be performed again. If the execution of the synchronous task within the lifecycle is completed, the lifecycle in which the function instance is located is switched to a next lifecycle.

In a specific embodiment, it may be detected, by using a name of a callback function and a name of an interface, whether an asynchronous interface exists in the callback function corresponding to the lifecycle. That is, the detecting whether an asynchronous interface exists in a callback function corresponding to the lifecycle, as mentioned in step S11, may be specifically:
detecting whether a name of the callback function corresponding to the lifecycle includes a first keyword;
if the name of the callback function corresponding to the lifecycle includes the first keyword, detecting whether an interface whose name includes a second keyword exists in the callback function corresponding to the lifecycle; and
if the interface whose name includes the second keyword exists in the callback function corresponding to the lifecycle, determining that the interface whose name includes the second keyword is the asynchronous interface.

To be specific, in this embodiment, an application developer may preset, in a development phase of a callback function according to a service requirement, the callback function corresponding to the lifecycle. For example, if an asynchronous interface YAPI needs to be set in an onCreate callback function, a first keyword "async" may be prefixed to a name of the callback function onCreate, and a second keyword "await" may be prefixed to a name of the asynchronous interface YAPI, so that a processor may first detect whether the name of the callback function is "asynconCreate", then detect whether an asynchronous interface exists in the callback function onCreate corresponding to a function instance startup lifecycle. If the name of the callback function is "asynconCreate", the processor detects whether the callback function asynconCreate includes an interface named "awaitYAPI". If the callback function asynconCreate includes the interface named "awaitYAPI", it is determined that the interface named "awaitY.API" is the asynchronous interface.

On the basis of this embodiment, in a specific embodiment, in addition to being set by the application developer, the name of the callback function and the name of the asynchronous interface may alternatively be set by a processor. That is, this embodiment of this application may further include:
obtaining an asynchronous interface invoking instruction, and determining a to-be-called callback function and a to-be-called asynchronous interface according to the asynchronous interface invoking instruction;
adding the to-be-called asynchronous interface to the to-be-called callback function; and
adding the first keyword to a name of the to-be-called callback function, and adding the second keyword to a name of the to-be-called asynchronous interface.

To be specific, in this embodiment of this application, when receiving an input asynchronous interface invoking instruction, the processor can determine the to-be-called callback function and the to-be-called asynchronous interface based on related information in the asynchronous interface invoking instruction, and add corresponding keywords to the name of the callback function and the name of the asynchronous interface, so that the processor can identify an asynchronous task based on the name of the callback function and the name of the asynchronous interface.

In a specific embodiment, the first keyword includes a keyword "async", and the second keyword includes a keyword "await".

"async" is a modifier prefixed to a function. A function defined with "async" returns, by default, a value of a promise object (a native JavaScript object that is a solution for asynchronous programming, which avoids additional callback by using a single callback) that is resolved (succeeded).

"await" is also a modifier, placed only in a function defined with "async", and may be understood as waiting. If "await" is used to modify a promise object, content (a resolved or rejected (failed) parameter) returned in the promise object can be obtained, and a statement proceeds only after a value is obtained.

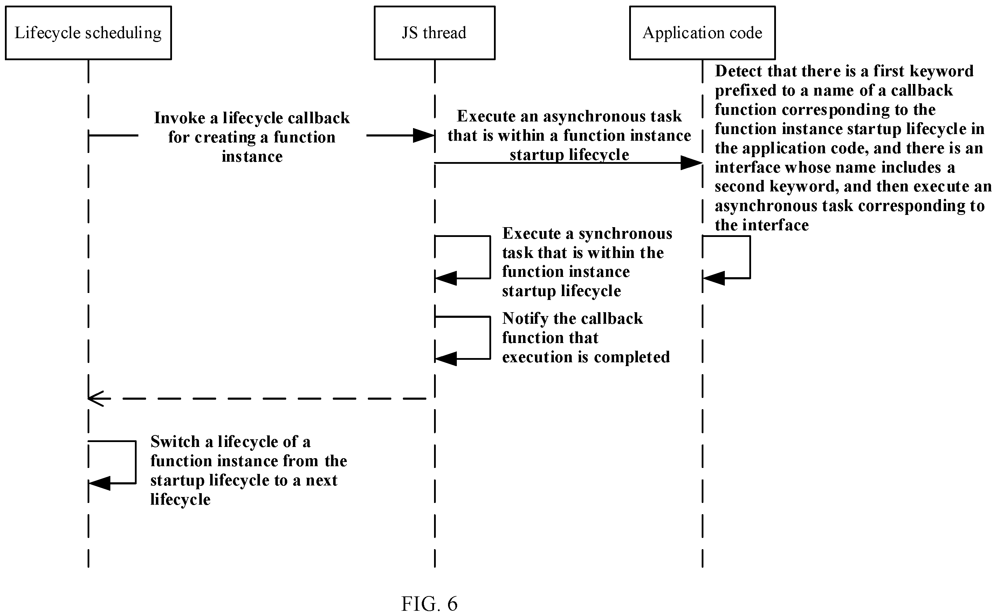

For example, FIG. 6 is a diagram of another lifecycle scheduling for a function instance according to an embodiment of this application.

As shown in FIG. 6, a lifecycle scheduling service first invokes a lifecycle callback for creating an ability. A JS thread detects whether an asynchronous interface exists in a callback function onCreate, that is, detects whether "async" is prefixed to a name of the callback function onCreate in application code and whether an interface whose name includes "await" exists. If both exist, the JS thread executes an asynchronous task corresponding to the interface, and upon completion, notifies onCreate that execution is completed, and a lifecycle of the ability is switched from a lifecycle corresponding to onCreate to a next lifecycle.

In a specific embodiment, the first keyword and the second keyword may alternatively be keywords of another type, and details are not described herein.

Step S12: Determine that an asynchronous task corresponding to the asynchronous interface is the asynchronous task that needs to be executed within the lifecycle.

In this embodiment of this application, it is detected, by detecting whether an asynchronous interface exists in a callback function, whether there is an asynchronous task that needs to be executed within a lifecycle. If the asynchronous interface exists, it proves that there is the asynchronous task that needs to be executed within the lifecycle. In this case, step S03 is performed.

Step S03: Switch the lifecycle in which the function instance is located to a next lifecycle after execution of the asynchronous task is completed.

In this embodiment, because the asynchronous task is executed asynchronously, and the processor cannot predict a completion time of the asynchronous task in advance, in this application, completion of the asynchronous task is monitored. When it is detected that execution of the asynchronous task is completed, it proves that processing of the asynchronous task is completed within a current lifecycle. In this case, the lifecycle in which the function instance is located is switched to the next lifecycle, to complete lifecycle scheduling for the function instance.

In a specific embodiment, lifecycle switching may be implemented by sending a period switching instruction to a lifecycle scheduling service. That is, the switching the lifecycle in which the function instance is located to a next lifecycle after execution of the asynchronous task is completed, as mentioned in step S03, may be specifically:
after the execution of the asynchronous task is completed, sending a cycle switching instruction to a lifecycle scheduling service, where the cycle switching instruction instructs the lifecycle scheduling service to switch the lifecycle in which the function instance is located to the next lifecycle.

For example, when a lifecycle in which an ability instance is located is a function instance startup lifecycle, and an asynchronous task within the function instance startup lifecycle is to connect to a resource library required by the ability instance during running of an application, if it is detected that the resource library required by the ability instance is connected, a cycle switching instruction is sent to a lifecycle scheduling service, so that the lifecycle scheduling service switches, according to the cycle switching instruction, the lifecycle in which the function instance is located to a function instance switching-to-foreground lifecycle.

In a specific embodiment, because the asynchronous task is executed asynchronously, and an execution time of the asynchronous task is not fixed, a synchronous task within the lifecycle may be further preferentially executed to improve task execution efficiency within the lifecycle. Before the execution of the asynchronous task is completed, that is, before step S03 is performed, the following steps may be further performed:
when there is the asynchronous task that needs to be executed within the lifecycle, storing the asynchronous task into a task queue; and
executing a synchronous task that is within the lifecycle, and executing the asynchronous task in the task queue after the execution of the synchronous task is completed.

For example, when a lifecycle in which an ability instance is located is a function instance startup lifecycle, and an asynchronous task within the function instance startup lifecycle is to connect to a resource library required by the ability instance during running of an application, the asynchronous task may be first put into in a task queue, then a synchronous task within the function instance startup lifecycle is executed, and a JS thread sequentially executes asynchronous tasks in the task queue when the JS thread is idle, thereby improving task execution efficiency within the lifecycle.

According to the lifecycle scheduling method provided in this embodiment of this application, a lifecycle in which a function instance is located is obtained; it is detected whether there is an asynchronous task that needs to be executed within the lifecycle; and if there is the asynchronous task that needs to be executed within the lifecycle, after execution of the asynchronous task is completed, the lifecycle in which the function instance is located is switched to a next lifecycle. In this application, after it is detected that there is an asynchronous task that needs to be executed within a lifecycle in which a function instance is located, the lifecycle in which the function instance is located is switched to a next lifecycle only after execution of the asynchronous task is completed. In this way, an original synchronous scheduling manner of the lifecycle is changed to implement a synchronous interface in an asynchronous manner, and processing of the asynchronous task is completed within the current lifecycle of the function instance.

Based on the foregoing embodiments, in a specific embodiment, switching of a lifecycle in which a function instance is located may be further driven by a state machine. That is, before execution of an asynchronous task is completed, this embodiment of this application may further include:
determining a lifecycle status of the function instance based on the lifecycle in which the function instance is located.

On this basis, the switching the lifecycle in which the function instance is located to a next lifecycle after execution of the asynchronous task is completed, as mentioned in step S03, may be specifically:
after the execution of the asynchronous task is completed, changing the lifecycle status of the function instance to a lifecycle status corresponding to the next lifecycle.

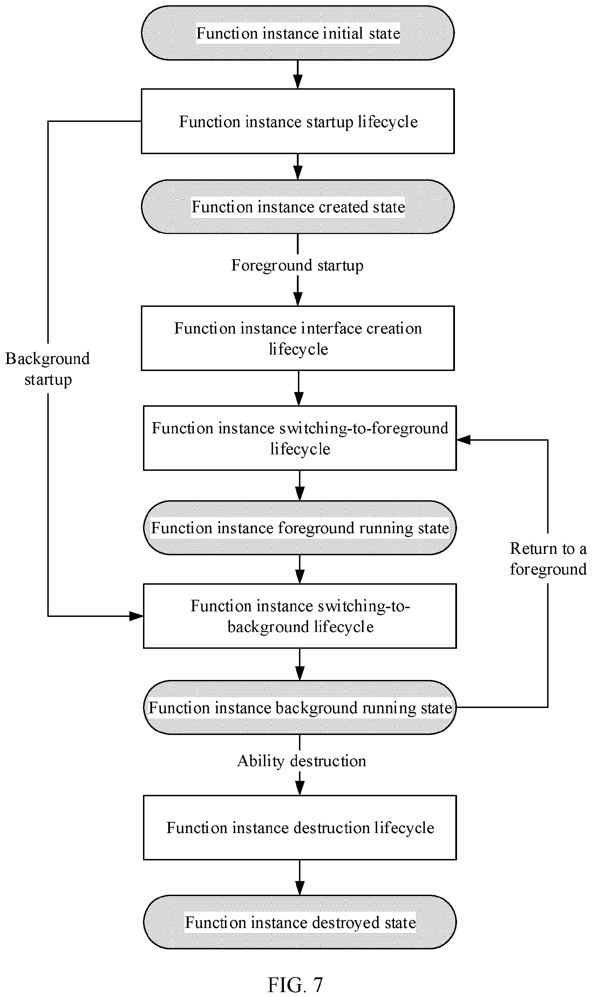

FIG. 7 is a diagram of lifecycle status switching according to an embodiment of this application.

Initial indicates that an ability is in an initial state. Started indicates that an ability is in a created state. Foreground indicates that an ability is in a foreground running state. Background indicates that an ability is in a background running state. Stopped indicates that an ability is in a destroyed state.

As shown in FIG. 7, a lifecycle of an ability switches between an "initial state", a "created state", a "foreground running state", a "background running state", and a "destroyed state". State switching is accompanied by a lifecycle callback of the ability, such as an "onCreate" lifecycle callback that switches from the "initial state" to the "created state".

In other words, in this embodiment of this application, a processor may preset a corresponding lifecycle status for each lifecycle, and before execution of an asynchronous task is completed, determine a lifecycle status of the function instance based on a lifecycle in which the function instance is located, to perform lifecycle switching by changing the lifecycle status. In this way, execution of a JS thread is not blocked, and a procedure of switching a lifecycle status of an ability is clearer.

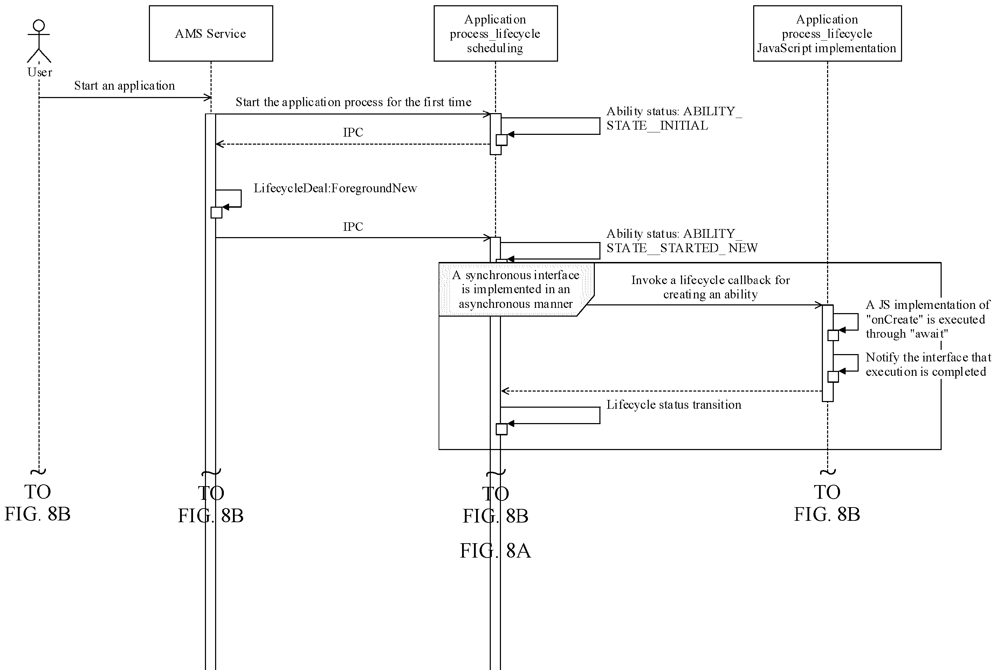

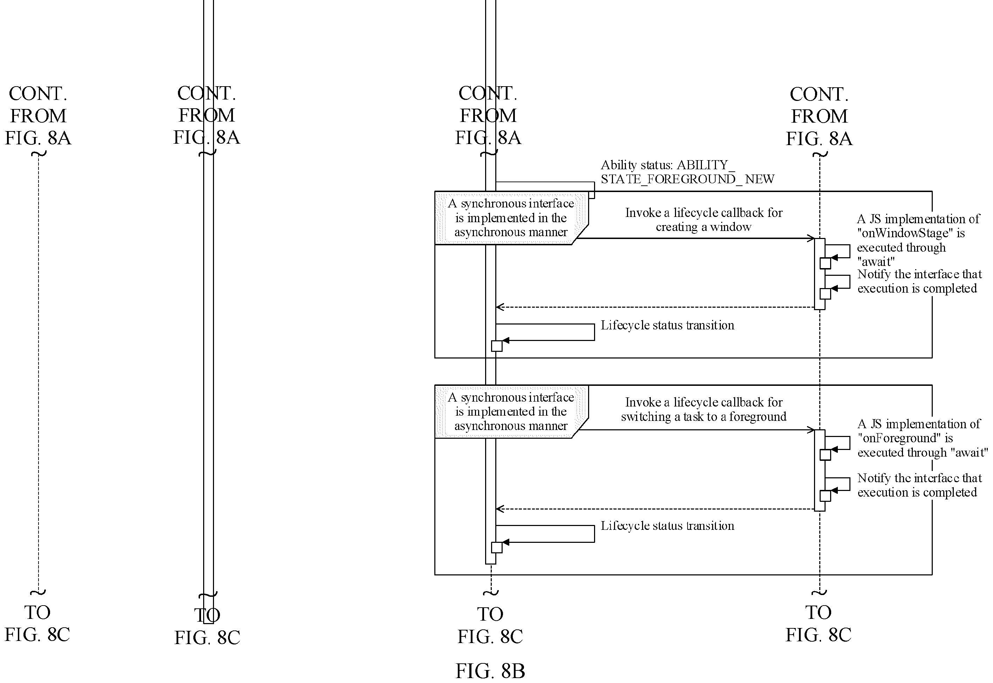

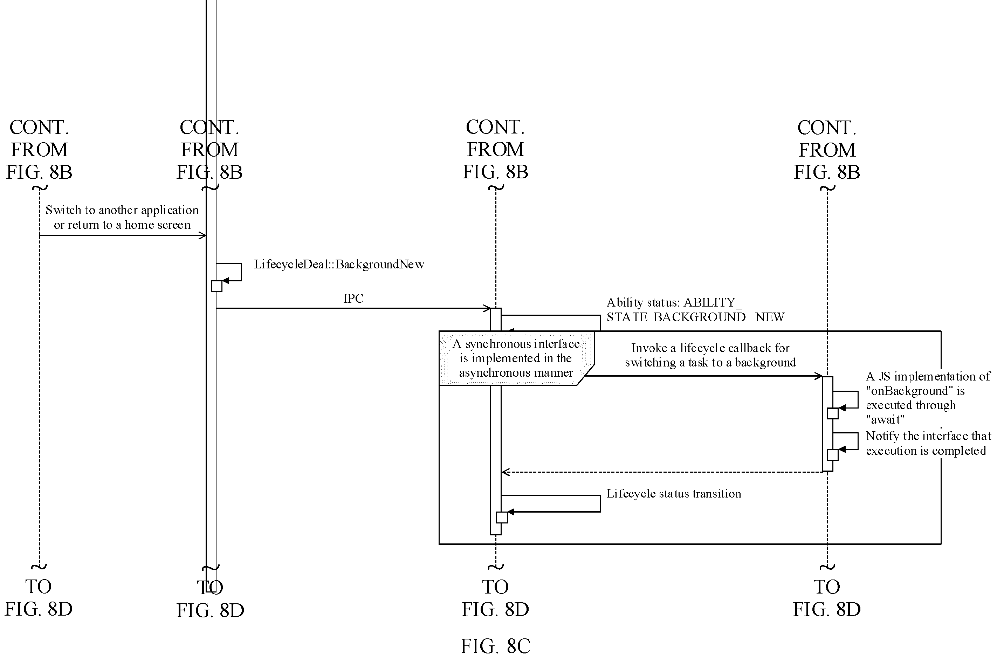

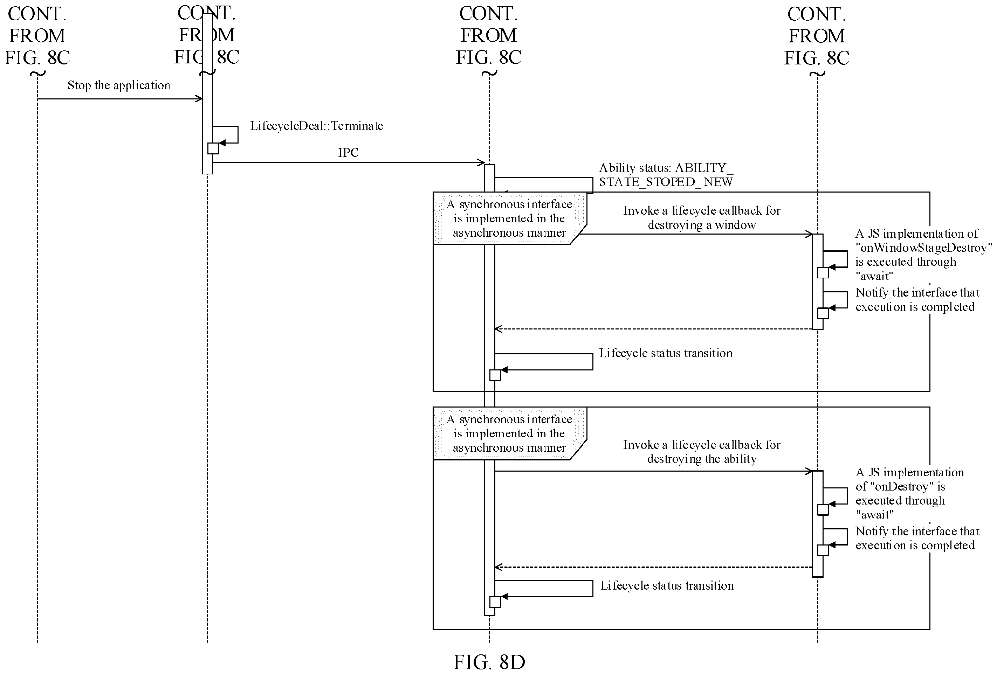

FIG. 8A to FIG. 8D are an overall flowchart of lifecycle status switching according to an embodiment of this application. As shown in FIG. 8A to FIG. 8D, a user may start an application by tapping a desktop icon, switch to another application, exit an application, or perform another operation. An operating system triggers, in response to a user operation through an AMS service, a series of lifecycle callbacks implemented by an application developer.

When the user starts an application by tapping a desktop icon, the AMS service invokes to start an application process for the first time. In this case, a lifecycle status of an ability is an initial state (Initial). The application process feeds back the lifecycle status of the ability to the AMS service through inter-process communication (IPC).

After receiving the lifecycle status of the ability, the AMS service triggers the lifecycle status to change to a foreground running state (LifecycleDeal::ForegroundNew) and sends the foreground running state to the application process through the inter-process communication (IPC) for lifecycle scheduling. In this case, the ability is in a created state (Started) and implements a synchronous interface in an asynchronous manner, that is, a lifecycle callback for creating the ability is invoked. A JS thread executes a JS implementation of onCreate through "await", and upon completion, notifies the interface that execution is completed. In this case, the application process performs a lifecycle status transition.

After the application process performs the lifecycle status transition, the ability is in a foreground running state (Foreground) and implements a synchronous interface in the asynchronous manner again, that is, a lifecycle callback for the ability to create Window Stage to load a user interface. The JS thread executes a JS implementation of onWindowStage through "await", and upon completion, notifies the interface that execution is completed. In this case, the application process performs a lifecycle status transition.

After the application process performs the lifecycle status transition, a synchronous interface is implemented in the asynchronous manner again, that is, a lifecycle callback for switching a task to a foreground is invoked. The JS thread executes a JS implementation of onForeground through "await", and upon completion, notifies the interface that execution is completed. In this case, the application process performs a lifecycle status transition.

When the user switches to another application or returns to a home screen, the AMS service triggers the lifecycle status to change to a background running state (LifecycleDeal::BackgroundNew) and sends the background running state to the application process through the inter-process communication (IPC) for lifecycle scheduling. In this case, the ability is in a background state (Background) and implements a synchronous interface in the asynchronous manner, that is, a lifecycle callback for switching the ability to a background is invoked. The JS thread executes a JS implementation of onBackground through "await", and upon completion, notifies the interface that execution is completed. In this case, the application process performs a lifecycle status transition.

When a user stops an application, the AMS service triggers the lifecycle status to change to a destroyed state (LifecycleDeal::Terminate) and sends the destroyed state to the application process through the inter-process communication (IPC) for lifecycle scheduling. In this case, a status of the ability changes to the destroyed state (Stoped) and a synchronous interface is implemented in the asynchronous manner, that is, a lifecycle callback for destroying a window is invoked first. The JS thread executes a JS implementation of onWindowStageDestroy through "await", and upon completion, notifies the interface that execution is completed. In this case, the application process performs a lifecycle status transition. Then, a lifecycle callback for destroying the ability is invoked. The JS thread executes a JS implementation of onDestroy through "await", and upon completion, notifies the interface that execution is completed. In this case, the application process performs a lifecycle status transition.

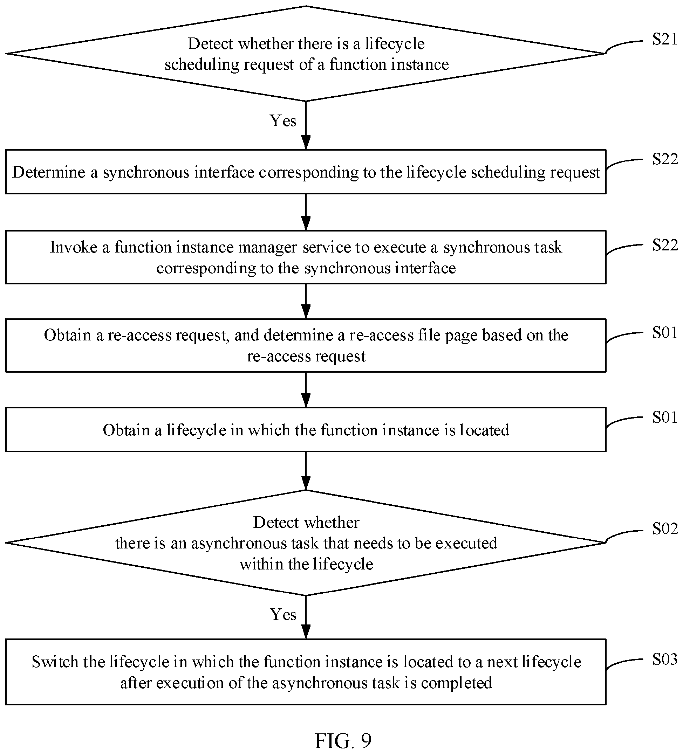

FIG. 9 is a flowchart of another lifecycle scheduling method according to an embodiment of this application. The method is applied to the processor 110 in the foregoing embodiment, and includes the following steps.

Step S21: Detect whether there is a lifecycle scheduling request of a function instance.

If there is the lifecycle scheduling request of the function instance, step S22 is performed.

In a specific embodiment, when there is no lifecycle scheduling request of the function instance, it proves that lifecycle scheduling does not need to be performed. In this case, no operation is needed.

Step S22: Determine a synchronous interface corresponding to the lifecycle scheduling request.

In this embodiment, the lifecycle scheduling request includes corresponding interface information, and the processor may determine, based on the interface information in the lifecycle scheduling request, the synchronous interface corresponding to the lifecycle scheduling request.

Step S23: Invoke a function instance manager service to execute a synchronous task corresponding to the synchronous interface.

In this embodiment, the function instance manager service (Ability Manager Service, AMS) is configured to manage a function instance. After the synchronous interface corresponding to the lifecycle scheduling request is determined, the function instance manager service is invoked to execute the synchronous task corresponding to the synchronous interface.

Step S01: Obtain a lifecycle in which the function instance is located.

Step S02: Detect whether there is an asynchronous task that needs to be executed within the lifecycle.

If there is the asynchronous task that needs to be executed within the lifecycle, step S03 is performed.

Step S03: Switch the lifecycle in which the function instance is located to a next lifecycle after execution of the asynchronous task is completed.

It should be noted that, technical solutions and beneficial effects of steps S01 to S03 in this embodiment are consistent with those of steps S01 to S03 in the foregoing embodiment, and details are not described herein.

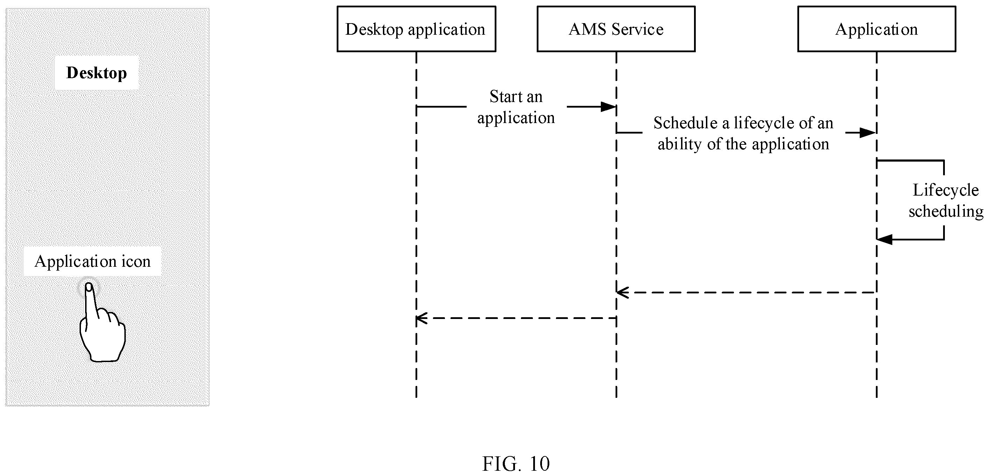

FIG. 10 is a diagram of an implementation of a lifecycle scheduling scenario according to an embodiment of this application.

As shown in FIG. 10, this embodiment of this application focuses on an implementation of lifecycle callbacks of an ability by an application developer. An AMS service completes lifecycle scheduling of the ability, and the application developer needs to complete corresponding service processing in these lifecycle callbacks. The following uses an "onCreate" lifecycle callback for creating an ability instance as an example. When a user starts an application by tapping a desktop icon, the AMS service receives a request to start the ability. After a series of processing, the AMS service invokes an "onCreate" JS interface implemented by the application developer.

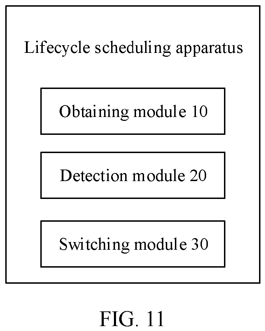

FIG. 11 is a diagram of a structure of a lifecycle scheduling apparatus according to an embodiment of this application. The apparatus includes:
an obtaining module 10, configured to obtain a lifecycle in which a function instance is located;
a detection module 20, configured to detect whether there is an asynchronous task that needs to be executed within the lifecycle; and
a switching module 30, configured to: if there is the asynchronous task that needs to be executed within the lifecycle, switch the lifecycle in which the function instance is located to a next lifecycle after execution of the asynchronous task is completed.

Based on the foregoing embodiments, in a specific embodiment, the detection module 20 may be specifically configured to:
detect whether an asynchronous interface exists in a callback function corresponding to the lifecycle; and
if the asynchronous interface exists in the callback function corresponding to the lifecycle, determine that an asynchronous task corresponding to the asynchronous interface is the asynchronous task that needs to be executed within the lifecycle.

Based on the foregoing embodiments, in a specific embodiment, the detection module 20 may be specifically configured to:
detect whether a name of the callback function corresponding to the lifecycle includes a first keyword;
if the name of the callback function corresponding to the lifecycle includes the first keyword, detect whether an interface whose name includes a second keyword exists in the callback function corresponding to the lifecycle; and
if the interface whose name includes the second keyword exists in the callback function corresponding to the lifecycle, determine that the interface whose name includes the second keyword is the asynchronous interface.

Based on the foregoing embodiments, in a specific embodiment, the detection module 20 may be further configured to:
obtain an asynchronous interface invoking instruction, and determine a to-be-called callback function and a to-be-called asynchronous interface according to the asynchronous interface invoking instruction;
add the to-be-called asynchronous interface to the to-be-called callback function; and
add the first keyword to a name of the to-be-called callback function, and add the second keyword to a name of the to-be-called asynchronous interface.

Based on the foregoing embodiments, in a specific embodiment, the first keyword includes a keyword "async", and the second keyword includes a keyword "await".

Based on the foregoing embodiments, in a specific embodiment, the switching module 30 may be specifically configured to:
when there is no asynchronous task that needs to be executed within the lifecycle, detect whether execution of a synchronous task within the lifecycle is completed; and
if the execution of the synchronous task within the lifecycle is completed, switch the lifecycle in which the function instance is located to the next lifecycle.

Based on the foregoing embodiments, in a specific embodiment, the switching module 30 may be further configured to:
when there is the asynchronous task that needs to be executed within the lifecycle, store the asynchronous task into a task queue; and
execute a synchronous task that is within the lifecycle, and execute the asynchronous task in the task queue after the execution of the synchronous task is completed.

Based on the foregoing embodiments, in a specific embodiment, the obtaining module 10 may be further configured to:
detect whether there is a lifecycle scheduling request of the function instance;
if there is the lifecycle scheduling request of the function instance, determine a synchronous interface corresponding to the lifecycle scheduling request; and
invoke a function instance manager service to execute a synchronous task corresponding to the synchronous interface.

Based on the foregoing embodiments, in a specific embodiment, the switching module 30 may be further configured to:
determine a lifecycle status of the function instance based on the lifecycle in which the function instance is located.

On this basis, the switching module 30 may be specifically configured to:
after the execution of the asynchronous task is completed, change the lifecycle status of the function instance to a lifecycle status corresponding to the next lifecycle.

Based on the foregoing embodiments, in a specific embodiment, the lifecycle includes at least one of a function instance startup lifecycle, a function instance destruction lifecycle, a function instance switching-to-foreground lifecycle, a function instance switching-to-background lifecycle, a function instance interface creation lifecycle, and a function instance interface destruction lifecycle.

The foregoing descriptions are merely example embodiments of this application, but are not intended to limit this application. Any modification, equivalent replacement, or improvement made without departing from the spirit and principle of this application should fall within the protection scope of this application.

## Claims

1. A lifecycle scheduling method, comprising:
obtaining a lifecycle in which a function instance is located;
detecting whether there is an asynchronous task that needs to be executed within the lifecycle; and
if there is the asynchronous task that needs to be executed within the lifecycle, switching the lifecycle in which the function instance is located to a next lifecycle after execution of the asynchronous task is completed.

2. The method according to claim 1, wherein the detecting whether there is an asynchronous task that needs to be executed within the lifecycle comprises:
detecting whether an asynchronous interface exists in a callback function corresponding to the lifecycle; and
if the asynchronous interface exists in the callback function corresponding to the lifecycle, determining that an asynchronous task corresponding to the asynchronous interface is the asynchronous task that needs to be executed within the lifecycle.

3. The method according to claim 2, wherein the detecting whether an asynchronous interface exists in a callback function corresponding to the lifecycle comprises:
detecting whether a name of the callback function corresponding to the lifecycle comprises a first keyword;
if the name of the callback function corresponding to the lifecycle comprises the first keyword, detecting whether an interface whose name comprises a second keyword exists in the callback function corresponding to the lifecycle; and
if the interface whose name comprises the second keyword exists in the callback function corresponding to the lifecycle, determining that the interface whose name comprises the second keyword is the asynchronous interface.

4. The method according to claim 3, wherein the method further comprises:
obtaining an asynchronous interface invoking instruction, and determining a to-be-called callback function and a to-be-called asynchronous interface according to the asynchronous interface invoking instruction;
adding the to-be-called asynchronous interface to the to-be-called callback function; and
adding the first keyword to a name of the to-be-called callback function, and adding the second keyword to a name of the to-be-called asynchronous interface.

5. The method according to claim 3, wherein the first keyword comprises a keyword "async" and the second keyword comprises a keyword "await".

6. The method according to claim 1, wherein the method further comprises:
when there is no asynchronous task that needs to be executed within the lifecycle, detecting whether execution of a synchronous task within the lifecycle is completed; and
if the execution of the synchronous task within the lifecycle is completed, switching the lifecycle in which the function instance is located to the next lifecycle.

7. The method according to claim 1, wherein before the execution of the asynchronous task is completed, the method further comprises:
when there is the asynchronous task that needs to be executed within the lifecycle, storing the asynchronous task into a task queue; and
executing a synchronous task that is within the lifecycle, and executing the asynchronous task in the task queue after the execution of the synchronous task is completed.

8. The method according to claim 1, wherein before the obtaining a lifecycle in which a function instance is located, the method further comprises:
detecting whether there is a lifecycle scheduling request of the function instance;
if there is the lifecycle scheduling request of the function instance, determining a synchronous interface corresponding to the lifecycle scheduling request; and
invoking a function instance manager service to execute a synchronous task corresponding to the synchronous interface.

9. The method according to claim 1, wherein before the execution of the asynchronous task is completed, the method further comprises:
determining a lifecycle status of the function instance based on the lifecycle in which the function instance is located; and
the switching the lifecycle in which the function instance is located to a next lifecycle after execution of the asynchronous task is completed comprises:
after the execution of the asynchronous task is completed, changing the lifecycle status of the function instance to a lifecycle status corresponding to the next lifecycle.

10. The method according to any one of claims 1 to 9, wherein the lifecycle comprises at least one of a function instance startup lifecycle, a function instance destruction lifecycle, a function instance switching-to-foreground lifecycle, a function instance switching-to-background lifecycle, a function instance interface creation lifecycle, and a function instance interface destruction lifecycle.

11. A lifecycle scheduling apparatus, comprising:
an obtaining module, configured to obtain a lifecycle in which a function instance is located;
a detection module, configured to detect whether there is an asynchronous task that needs to be executed within the lifecycle; and
a switching module, configured to: if there is the asynchronous task that needs to be executed within the lifecycle, switch the lifecycle in which the function instance is located to a next lifecycle after execution of the asynchronous task is completed.

12. An electronic device, comprising:
a processor and a memory, wherein the memory is configured to store at least one instruction, and when the instruction is loaded and executed by the processor, the lifecycle scheduling method according to any one of claims 1 to 10 is implemented.

13. A computer-readable storage medium, wherein the computer-readable storage medium stores a computer program, and when the computer program is executed by a processor, the lifecycle scheduling method according to any one of claims 1 to 10 is implemented.
